# EUROPÄISCHE PATENTANMELDUNG

(11) **EP 1 796 338 A1**
(43) Veröffentlichungstag der Anmeldung: **13.06.2007**
(21) Anmeldenummer: 05026761.6
(22) Anmeldetag: 07.12.2005
(51) Int. Cl.: H04L 29/06, H04L 29/12

(54) **Verfahren zur Kommunikation eines Clients mit einem Server sowie Client und Server zur Durchführung dieses Verfahrens**

(71) Anmelder: SIEMENS AKTIENGESELLSCHAFT, 80333 München (DE)
(72) Erfinder: Koora, Kalyan, Dr., 46395 Bocholt (DE); Meshkova, Elena, 52066 Aachen (DE)

(57) **Zusammenfassung**

In einem Verfahren zur Kommunikation zwischen einem anfragenden Kommunikationsteilnehmer, d.h. einem so genannten Client (CL) und einem antwortenden Kommunikationsteilnehmer, d.h. einem so genannten Server (SV) sendet der Client eine Nachricht mit einer Anfrage, also mit einer so genannten Query (Qy) an den Server. Daraufhin sendet der Server für den Fall, dass er die Anfrage nicht innerhalb eines ersten Zeitintervalls (T1) beantworten kann, eine Nachricht (CB) an den Client, in der der Server dem Client eine zweites Zeitintervall oder ein Zeit (T2) mitteilt, nach dessen bzw. deren Ablauf der Server die Anfrage voraussichtlich beantworten kann.

## Beschreibung

Es ist eine häufig zu beobachtende Erscheinung in drahtlosen oder drahtgebundenen Netzen, dass ein so genannter Client, also ein anfragender Kommunikationsteilnehmer einen Dienst in Anspruch nehmen möchte, zu dessen Durchführung eine Kommunikation mit mehreren unterschiedlichen Servern erforderlich ist. Wenn zum Beispiel die physikalische Verbindung eines Clients mit einem Zugangsknoten, dem so genannten Access Node hergestellt ist, will der Client z.B. mit DHCP, DNS, POP3-oder anderen Servern kommunizieren. Typischerweise sind diese verschiedenen Server nicht innerhalb der lokalen Verbindung oder Zone vorhanden sondern über das gesamte Netzwerk verteilt.

In einem anderen Beispiel strebt der Client, den man auch als Terminal bezeichnen kann, eine drahtlose Verbindung zu einem Funknetz an. Vor dem Verbindungsaufbau, dem so genannten "Attachment", findet dann normalerweise eine Suche nach den dazu verfügbaren Diensten statt, die so genannte "Service Discovery" (siehe dazu auch den Aufsatz "Der Verlust der informationellen Selbstbestimmung ? - Anonymitätsaspekte bei Bluetooth und WLAN" von M. Handy, M. Haase, D. Timmermann, im Internet verfügbar unter
http://www.vs.inf.ethz.ch/publ/se/handy iuk2003.pdf. Nun verwenden die Zugangsknoten ("Access Points") der unterschiedlichen Netzwerkbetreiber im allgemeinen unterschiedliche Funkkanäle. Hierdurch wird es dem Terminal die Sammlung der jeweiligen Informationen von unterschiedlichen Access Points erschwert, da das Terminal hierfür u.U. mehrmals die Funkfrequenz wechseln muss.

In den beschriebenen Fällen wird das Terminal Anfragen (so genannte "Requests") an die beteiligten Server bzw Knoten senden und auf eine entsprechende Antwort warten. Normalerweise ist jede Antwortzeit durch einen entsprechenden Parameter begrenzt. Wenn ein Server nicht zur Antwort innerhalb der maximalen Antwortzeit geben kann oder die Anfrage mit Fehlern empfangen hat und deshalb ignoriert, verhält sich das Terminal (der Client) so, als ob der Server abgeschaltet ist oder es versucht die Anfrage immer wieder erneut zu senden. Das Terminal muss auf eine Antwort warten, bevor es sich entscheidet. Während dieser Wartezeit kann es keine andere Operation ausführen.

Der vorliegenden Erfindung liegt die Aufgabe zugrunde, diese Situation zu verbessern. Diese Aufgabe wird durch ein Verfahren, einen Client oder einen Server nach einem der Patentansprüche gelöst.

Die grundlegende Idee der vorliegenden Erfindung besteht darin, die bekannten Protokolle zur Client-Server-Kommunikation zu erweitern, indem eine neue Operation in diese Protokolle eingeführt wird, mit der die o. g. Probleme gemildert, wenn nicht beseitigt werden.

Die Erfindung kann beispielsweise verwirklicht werden durch
- ein Verfahren zur Kommunikation zwischen einem anfragenden Kommunikationsteilnehmer, d.h. einem so genannten Client (CL) und einem antwortenden Kommunikationsteilnehmer, d.h. einem so genannten Server (SV), bei dem der Client eine Nachricht mit einer Anfrage, also mit einer so genannten Query (Qy) an den Server sendet, woraufhin der Server für den Fall, dass er die Anfrage nicht innerhalb eines ersten Zeitintervalls (T1) beantworten kann, eine Nachricht (CB) an den Client sendet, in der der Server dem Client ein zweites Zeitintervall oder ein Zeit (T2) mitteilt, nach dessen bzw. deren Ablauf der Server die Anfrage voraussichtlich beantworten kann;
- ein Verfahren der o. a. Art, bei dem der Client vor Ablauf des ihm nach der ersten Anfrage mitgeteilten zweiten Zeitintervalls bzw. der Zeit (T2) keine weiteren Anfragen an den Server richtet, deren Beantwortung die Möglichkeit zur Beantwortung der ersten Anfrage voraussetzen würde;
- ein Verfahren der o. a. Art, bei dem die Nachricht (CB) auch eine Kennung, d.h. eine so genannte Request-ID (RID) enthält, anhand derer die Anfrage eindeutig identifiziert werden kann;
- ein Verfahren der o. a. Art, bei dem der Client nach Ablauf des zweiten Zeitintervalls bzw. der Zeit (T2) eine Anfrage an den Server sendet, in der er anhand der zuvor empfangenen Kennung (RID) auf die vorherige Anfrage Bezug nimmt, auf die der Server unter Angabe dieser Kennung (RID) geantwortet hat;
- einen Server (SV) in einem Kommunikationssystem mit mindestens einem Client (CL) mit einer Einrichtung zum Empfang von Anfragen solcher Clients und einer Einrichtung zum Abschätzen der benötigten Antwortzeit (T2) für den Fall, dass er eine Anfrage (Qy) nicht innerhalb eines ersten Zeitintervalls (T1) beantworten kann, und einer Einrichtung zur Versendung einer Nachricht (CB) an den anfragenden Client, in der diesem Client die geschätzte benötigte Antwortzeit (T2) mitgeteilt wird;
- einen Server (SV) der o. a. Art, mit einer Einrichtung zur Erzeugung einer Kennung (RID) zu einer Anfrage (Qy) eines Clients (CL), die dem Client (CL) mitgeteilt wird, damit dieser bei einer späteren Anfrage auf die erste Anfrage (Qy) Bezug nehmen kann;
- einen Client (CL) in einem Kommunikationssystem, der für den Fall, dass ihm von einem Server (SV), an den er eine erste Anfrage (Qy) gesandt hat, eine Nachricht (CB) mit einer geschätzten benötigten Antwortzeit (T2) geschickt wurde, weitere Anfragen, deren Beantwortung die Möglichkeit zur Beantwortung der ersten Anfrage (Qy) voraussetzen würde, nicht vor Ablauf dieser geschätzten benötigten Antwortzeit (T2) an den Server (SV) sendet;
- einen Client (CL) der o. a. Art, der in weiteren Anfragen mit Hilfe einer Kennung (RID), die ihm auf die erste Anfrage (Qy) hin vom Server (SV) mitgeteilt wurde, auf die erste Anfrage (Qy) Bezug nimmt.

Im Folgenden wird die Erfindung mit Hilfe vorteilhafter Ausführungsbeispiele und anhand von Figuren näher erläutert.

Sendet ein Client eine Anfrage an einen (z.B. ihm nahe gelegenen) Server und kann dieser Server die Anfrage nicht sofort, also z.B. innerhalb eines Zeitintervalls T1 beantworten, z.B. weil die dazu benötigte Information nicht in einer lokalen Datenbank des Servers verfügbar ist, dann wird es häufig erforderlich sein, die Anfrage an einen anderen, möglicherweise entfernter gelegenen Server weiterzuleiten. Anstelle nun den Client einfach auf eine Antwort warten zu lassen, sieht die vorliegende Erfindung vor, dass der Server in dieser Situation eine Nachricht - wir nennen sie im folgenden auch "Callback-Message" oder kurz CBM - an den Client sendet, in der der Client aufgefordert wird, die Anfrage später zu wiederholen. Die einfache Angabe "später" wäre aber wenig hilfreich, weil nun der Client wieder in der Situation wäre, selbst entscheiden zu müssen, ob oder wann er die Anfrage erneut sendet. Deshalb sieht die Erfindung vor, dass die CBM eine Zeitangabe, z.B. in Form eines Zeitintervalls oder einer Zeit (T2) enthält, nach dessen bzw. deren Ablauf der Server die Anfrage voraussichtlich beantworten kann.

Zwischenzeitlich könnte der Server die Antworten der von ihm seinerseits kontaktierten anderen Server zwischenspeichern, um die nächste Anfrage des Clients umso schneller beantworten zu können. Um die Prozedur weiter zu beschleunigen, könnte der Client bei seiner nächsten Anfrage eine Kennung verwenden, um auf seine ursprüngliche Anfrage Bezug zu nehmen, wodurch der Server sehr einfach erkennen würde, dass diese Anfrage nun mit den gespeicherten Informationen unmittelbar beantwortet werden kann.

Vorteile der Erfindung kann man darin sehen, dass
- die Einführung einer neuen Operation bzw. eines neuen Operationscodes in existierende Protokolle diese nicht stören würden;
- die CBM keine Fehlermeldung ist, wodurch unangemessenen Reaktionen des Clients, der eine solche Fehlermeldung empfangen würde, vermieden werden;
- die Verkehrslast in dem Netzwerk reduziert wird, weil die Clients weit weniger häufig Anfragen an Server senden, die diese Anfragen (noch) nicht beantworten können;
- die effektiven Antwortzeiten verkürzt werden, weil der Client zu einer Zeit erneut anfragt, die der Server ihm mitgeteilt hat, und nicht vorsichtshalber erst später.

Besondere Vorteile ergeben sich in einem drahtlosen Netzwerk. Wenn der Client die Informationen von unterschiedlichen Access Points einholen muss (wie z.B. bei der so genannten "Service Discovery"), kann er nach dem Erhalt einer CBM sofort auf einen anderen Funkkanal wechseln, ohne unnötige Zeit zu verlieren. Danach kann der Client zur optimalen Zeit auf den vorherigen Funkkanal wechseln, um seine ursprüngliche Anfrage zu wiederholen, gegebenenfalls unter Bezugnahme auf die ursprüngliche Anfrage.

Ferner könnten z.B. bei Übertragungen nach dem IEEE-Standard 802. 11 für die 1- und 2-Megabit-pro-Sekunde (Mbps) WLANs (d.h. für so genannte Wireless Local Area Networks) im 2.4-GHz Band die so genannten "Backoff"-Zeiten, d. h. die zufällig verteilten Zeitintervalle, die eine Station warten muss, bevor sie ein Paket über das WLAN senden kann, reduziert werden, was den Durchsatz des Netzwerks deutlich steigern könnte. Außerdem könnten Clients im WLAN schneller zwischen unterschiedlichen Kanälen wechseln. Entsprechendes gilt analog für Übertragungen nach ähnlichen Standards.

Mit der CBM könnte man auch die Adresse des antwortenden Servers an den Client übertragen, so dass dieser bei einer erneuten Anfrage diese direkt an den vorher erreichten Server senden kann und nicht mehr über einen Rundruf (d.h. einen so genannten Broadcast) an alle möglicherweise zuständigen Server senden muss.

Auf Seiten des Servers ergeben sich ebenfalls Vorteile aus der Erfindung. So wird der Server von unnötigen, weil verfrühten und deshalb erfolglosen Anfragen des Clients entlastet. Die hierdurch frei werdende Kapazität kann zur schnelleren Bearbeitung der Anfrage genutzt werden. Außerdem könnten Server ihre Antworten vorsorglich speichern (so genannter Backup), und auf diese Weise gleiche Anfragen weiterer Clients schneller beantworten.

Im Folgenden soll am Beispiel eines existierenden Protokolls, des so genannten "Reverse Address Resolution Protocol" RARP beschrieben werden, wie ein solches existierendes Protokoll im Sinne der vorliegenden Erfindung modifiziert und in WLANs zur so genannten "Service Discovery" (siehe dazu auch den Aufsatz "Der Verlust der informationellen Selbstbestimmung ? - Anonymitätsaspekte bei Bluetooth und WLAN" von M. Handy, M. Haase, D. Timmermann, im Internet verfügbar unter http://www.vs.inf.ethz.ch/publ/se/handy iuk2003.pdf werden kann. Das RARF-Protokoll wurde in dem Dokument "RFC 903, A Reverse Address Resolution Protocol" der Network Working Group von den Autoren R. Finlayson, T. Mann und M. Theimer des Computer Science Department der Stanford University im Juni 1984 definiert. Eine Erläuterung findet sich in einem Eintrag des Internet-Lexikons "Wikipedia" unter dem URL http://de.wiokipedia.org/wiki/RARP. Diese Dokumente wurden der vorliegenden Patentanmeldung bei der Erstanmeldung als Anlagen beigefügt.

Noch bevor die Verbindung (das so genannte "Attachment") mit dem WLAN erfolgt, muss der Client Informationen über die Verfügbarkeit spezifischer Dienste in einem WLAN erhalten, das durch einen WLAN-Zugang (Access Point) über einen Kanal unterstützt wird. Von Seiten des Access Points wird diese Information über verschiedene so genannte "Service Providing Units" (SPUs) - das können z. B. Drucker, Internet-Dienste, so genannte "Roaming Agreements", also Verträge zwischen regionalen Diensteanbietern über Bereichswechsel (Roaming), etc. sein - verteilt. Die zugehörigen Server wären dann z. B. Drucker Server, DHCP, DNS, WWW etc.

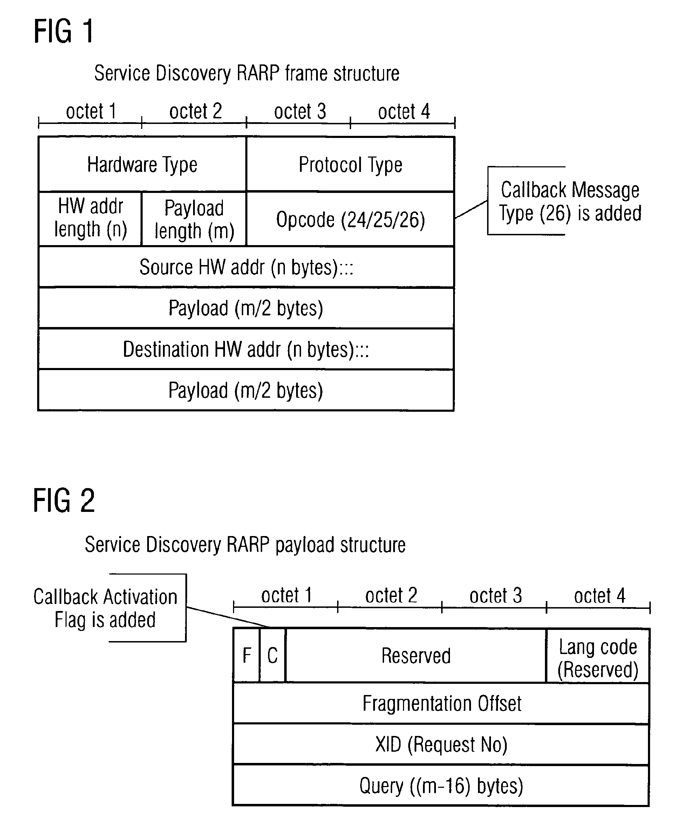

Die modifizierte Paketstruktur ist schematisch in den Figuren 1 und 2 dargestellt. Dabei zeigt Figur 1 die so genante "Service Discovery RARP Frame Structure" und Figur 2 die so genannte "Service Discovery RARP Payload Structure". Die CBM kann mit dem neuen Operationskode (Opcode), hier z. B. "26" definiert werden. Wenn die CBM gesendet wird, kann die Paketstruktur des RARP völlig unverändert bleiben. Es würde lediglich das so genannte "Query Field" anstelle der "Service Discovery Information" eine Angabe über die Zeit enthalten, zu der bzw. nach deren Ablauf der Server eine erneute Anfrage des Clients für sinnvoll hält, also ein Zeitintervall oder ein Zeit (T2), nach dessen bzw. deren Ablauf der Server die Anfrage voraussichtlich beantworten kann.

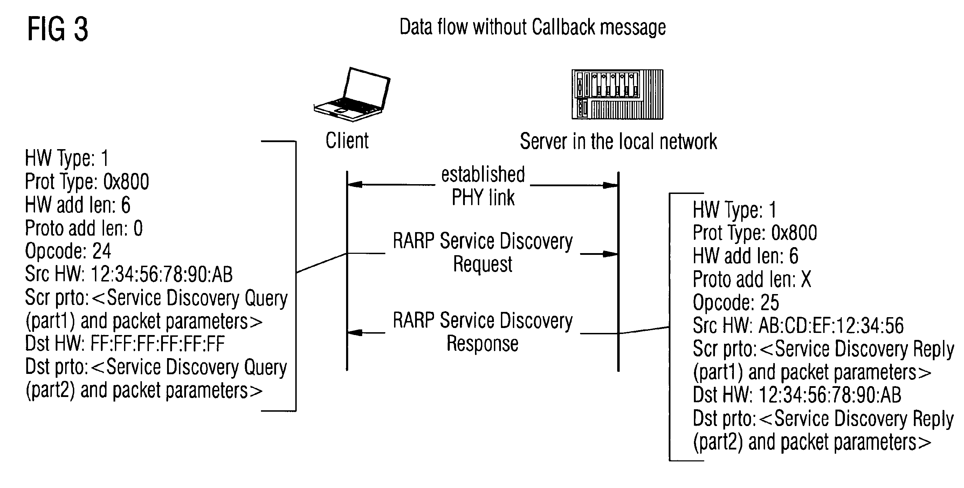

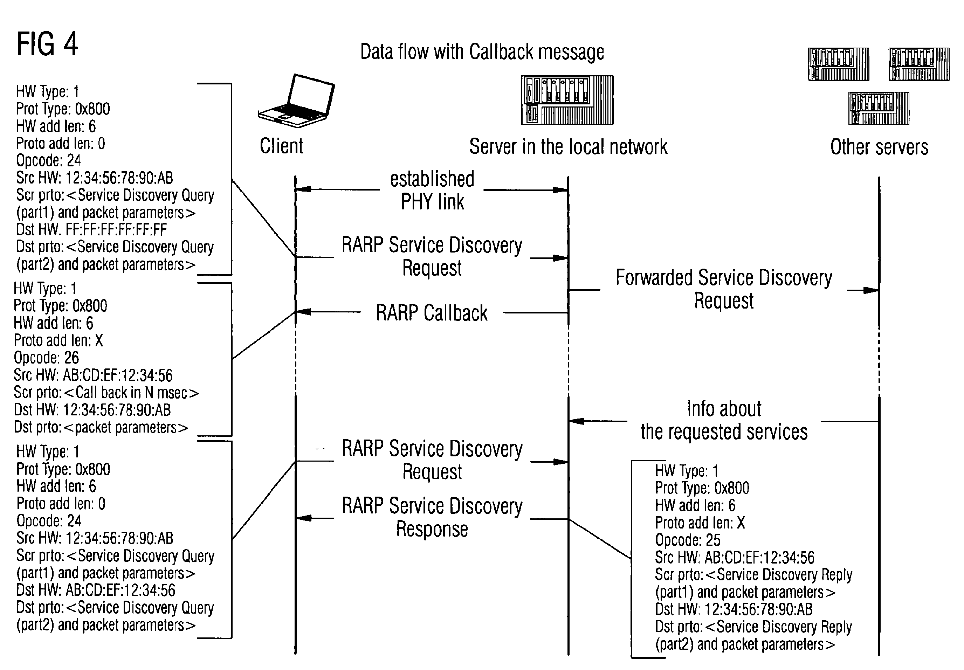

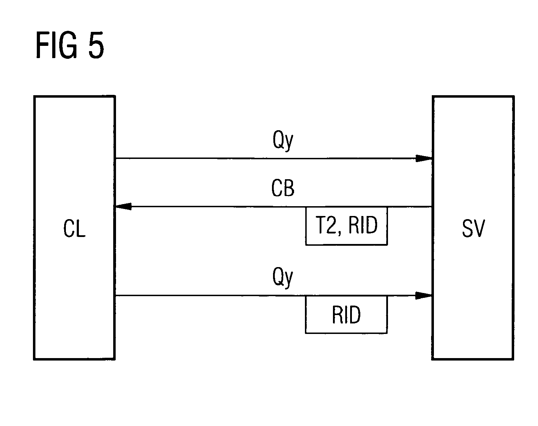

Figur 3 zeigt die Anwendung des RARP zur Service Discovery ohne die vorliegende Erfindung (d.h. den Stand der Technik). In diesem Fall muss der Client einfach auf eine Antwort warten, ohne eine andere Entscheidung treffen zu können. Figur 4 zeigt die Anwendung des RARP zur Service Discovery mit der "Callback"-Funktion (CBM) gemäß der vorliegenden Erfindung. In diesem Fall benötigt der angerufenen Server die Hilfe weiterer Netzwerk-Einheiten um die Anfrage des Clients beantworten zu können.

Hier sendet der Server an den Client die Callback Message CBM, wodurch er den Client auffordert, nach einer bestimmten Zeit wieder anzufragen. Nach dem Empfang dieser Nachricht speichert der Client die unbeantwortete Anfrage und schaltet auf einen anderen Kanal um, um dort seine "Service Discovery Request Message", d.h. seine Anfrage nach dort verfügbaren Diensten, zu senden. Nach Ablauf der vom Server in der CBM angegebenen Zeit wird der Client seine Anfrage an den Server, der zuvor die Anfrage noch nicht beantworten konnte, wiederholen. Unter der Annahme, das die in der CBM angegebenen Zeit ausreichte, damit der vom Client ursprünglich gerufene Server die zur Beantwortung der Anfrage benötigte Information von einem anderen Server erfragen und in seiner Datenbank speichern konnte, ist der Server nun bei der erneuten Anfrage des Clients in der Lage, die Anfrage - im eigentliche Sinne - zu beantworten. Die wiederholte Anfrage würde nun nicht mehr - wie zuvor - vom Client als Rundruf (d.h. als so genannter Broadcast, z.B. an alle in Frage kommenden Server) gesendet werden, sondern als so genannter Unicast, weil der Client nun die MAC-Adresse des Servers bereits kennt.

Die vorliegende Erfindung eignet sich natürlich nicht nur in den beschrieben Fällen, sondern auch in anderen ähnlichen Protokollen, die in Systemen mit mehreren Servern verwendet werden, insbesondere auch im Zusammenhang mit verteilten Datenbanken, so genannten Peer-to-Peer-Verbindungen (wie z.B. "Gnutella" oder "Kazaa"), oder im Zusammenhang mit Service Discovery Architekturen mit mehrere Agenten.

## Patentansprüche

1. Verfahren zur Kommunikation zwischen einem anfragenden Kommunikationsteilnehmer, d.h. einem so genannten Client (CL) und einem antwortenden Kommunikationsteilnehmer, d.h. einem so genannten Server (SV), bei dem der Client eine Nachricht mit einer Anfrage, also mit einer so genannten Query (Qy) an den Server sendet, woraufhin der Server für den Fall, dass er die Anfrage nicht innerhalb eines ersten Zeitintervalls (T1) beantworten kann, eine Nachricht (CB) an den Client sendet, in der der Server dem Client ein zweites Zeitintervall oder ein Zeit (T2) mitteilt, nach dessen bzw. deren Ablauf der Server die Anfrage voraussichtlich beantworten kann.

2. Verfahren nach Anspruch 1, bei dem der Client vor Ablauf des ihm nach der ersten Anfrage mitgeteilten zweiten Zeitintervalls bzw. der Zeit (T2) keine weiteren Anfragen an den Server richtet, deren Beantwortung die Möglichkeit zur Beantwortung der ersten Anfrage voraussetzen würde.

3. Verfahren nach Anspruch 1, bei dem die Nachricht (CB) auch eine Kennung, d.h. eine so genannte Request-ID (RID) enthält, anhand derer die Anfrage eindeutig identifiziert werden kann.

4. Verfahren nach einem der vorhergehenden Ansprüche, bei dem der Client nach Ablauf des zweiten Zeitintervalls bzw. der Zeit (T2) eine Anfrage an den Server sendet, in der er anhand der zuvor empfangenen Kennung (RID) auf die vorherige Anfrage Bezug nimmt, auf die der Server unter Angabe dieser Kennung (RID) geantwortet hat.

5. Server (SV) in einem Kommunikationssystem mit mindestens einem Client (CL) mit einer Einrichtung zum Empfang von Anfragen solcher Clients und einer Einrichtung zum Abschätzen der benötigten Antwortzeit (T2) für den Fall, dass er eine Anfrage (Qy) nicht innerhalb eines ersten Zeitintervalls (T1) beantworten kann, und einer Einrichtung zur Versendung einer Nachricht (CB) an den anfragenden Client, in der diesem Client die geschätzte benötigte Antwortzeit (T2) mitgeteilt wird.

6. Server (SV) nach Anspruch 5, mit einer Einrichtung zur Erzeugung einer Kennung (RID) zu einer Anfrage (Qy) eines Clients (CL), die dem Client (CL) mitgeteilt wird, damit dieser bei einer späteren Anfrage auf die erste Anfrage (Qy) Bezug nehmen kann.

7. Client (CL) in einem Kommunikationssystem, der für den Fall, dass ihm von einem Server (SV), an den er eine erste Anfrage (Qy) gesandt hat, eine Nachricht (CB) mit einer geschätzten benötigten Antwortzeit (T2) geschickt wurde, weitere Anfragen, deren Beantwortung die Möglichkeit zur Beantwortung der ersten Anfrage (Qy) voraussetzen würde, nicht vor Ablauf dieser geschätzten benötigten Antwortzeit (T2) an den Server (SV) sendet.

8. Client (CL) nach Anspruch 7, der in weiteren Anfragen mit Hilfe einer Kennung (RID), die ihm auf die erste Anfrage (Qy) hin vom Server (SV) mitgeteilt wurde, auf die erste Anfrage (Qy) Bezug nimmt.
